**Europäisches Patentamt**

**European Patent Office**

**Office européen des brevets**

(19)

(11) Veröffentlichungsnummer: **0 197 401 B1**

# EUROPÄISCHE PATENTSCHRIFT

(12)

(45) Veröffentlichungstag der Patentschrift: **16.10.91**

(51) Int. Cl.⁵: **F16K 24/04**, F16K 31/20, F02M 55/00

(21) Anmeldenummer: **86103931.1**

(22) Anmeldetag: **22.03.86**

(54) Schwimmergesteuertes Ventil.

(30) Priorität: **03.04.85 DE 3512191**

(43) Veröffentlichungstag der Anmeldung:
**15.10.86 Patentblatt 86/42**

(45) Bekanntmachung des Hinweises auf die
Patenterteilung:
**16.10.91 Patentblatt 91/42**

(84) Benannte Vertragsstaaten:
**DE FR GB IT SE**

(56) Entgegenhaltungen:
**DE-A- 2 932 014**
**US-A- 1 851 016**
**US-A- 2 043 074**

(73) Patentinhaber: **Mannesmann Kienzle GmbH**
**Heinrich-Hertz-Strasse**
**W-7730 Villingen-Schwenningen(DE)**

(72) Erfinder: **Kelch, Heinz**
**Holzwiese 28**
**W-7744 Köngsfeld 5(DE)**

Rank Xerox (UK) Business Services

**Beschreibung**

Die Erfindung betrifft ein schwimmergesteuertes Ventil, welchem ein einem Schwimmer Schwimmraum bietender Tank mit einer Gasaustauschöffnung, einer Öffnung für den Flüssigkeitszufluß und einem Sockel zugeordnet ist und welches eine druckfreie Einspeisung des Tankinhaltes in einen im Sockel quer zur Hochachse des Tanks ausgebildeten Kanal gestattet entsprechend den im Oberbegriff von Anspruch 1 aufgeführten Merkmalen, welche aus der US-A-2043074 bekannt sind. Ist die Aufgabe gestellt, eine zuflußabhängige Einspeisung eines Fluids in ein Leitungssystem bzw. einen verbrauchsabhängigen Zufluß eines Fluids in ein Leitungssystem zu verwirklichen, so ist es üblich, diese Aufgabe mit einem schwimmergesteuerten Ventil zu lösen, das über einen relativ weiten Durchflußmengenbereich ein Regeln der Einspeisung ermöglicht, was letztlich die entscheidende Voraussetzung für eine kontinuierliche Durchfluß-Momentanwertanzeige darstellt. Ein typisches Anwendungsbeispiel für ein derartiges Ventil ist bekanntlich bei einem Betriebssystem eines Dieselmotors dann gegeben, wenn das Betriebssystem für Kraftstoffverbrauchsmessung eingerichtet ist.

Im allgemeinen sieht, falls keine Differenzmessung erfolgt, ein derartiges Betriebssystem einen als Einspritzkreislauf bezeichneten Kraftstoffkreislauf mit einer gegenüber der üblichen Einspritzmenge relativ großen, eine Spülfunktion ausübenden Umlaufmenge vor. In diesen Kraftstoffkreislauf wird lediglich die von der Einspritzpumpe "verbrauchte" Kraftstoffmenge über eine Saugleitung, in die auch das Mengenmeßgerät eingeschaltet ist, aus dem Kraftstoffvorratstank nachgesaugt. Ein solches Betriebssystem macht abhängig vom Einspritzverfahren, beispielsweise bei Cummins-Motoren und bei Verwendung von Verteilereinspritzpumpen und Membranförderpumpen die Verwendung eines in den Einspritzkreislauf eingeschalteten Gasabscheiders erforderlich, da die übliche Entgasung der Überschußkraftstoffmenge im Kraftstoffvorratstank in diesem Falle nicht mehr möglich ist. Auf der anderen Seite bietet es sich an, in dem für die Gasabscheidung vorgesehenen Tank einen Schwimmer anzuordnen und das dem Tank zugeordnete Ventil, über welches der Kraftstoffrückfluß, abhängig von der Einspritzmenge in die Saugleitung zurückgespeist wird, mittels des Schwimmers zu steuern.

Die angestrebte kontinuierliche Regelung der Rückflußeinspeisung ist jedoch insofern problematisch, als mit einem möglichst geringen Schwimmerhub und somit möglichst geringer Hysterese ein Kraftstoffdurchfluß zwischen einem Null- und einem Maximalwert steuerbar sein soll, daß aber andererseits, abgesehen davon, daß der Rückfluß oft schwallartig auftritt, auf das Ventil, ausgehend von der Kraftstofförderpumpe ein erheblicher Sog ausgeübt wird, so daß, insbesondere im Bereich der Schließstellung des Ventils, Resonanzerscheinungen und Abreißeffekte auftreten, die eine unruhige Momentanwertanzeige verursachen.

Es ist gemäß der DE-A-29 32 014 bereits versucht worden, dieses Problem dadurch zu lösen, daß für den mit dem Schwimmer verbundenen Schließkörper des Ventils eine weiche, elastische Membran Anwendung findet, mit der durch Hochbiegen beim Anheben des Schwimmers ein gradweises Freilegen der Ventilöffnung erfolgen soll. Bei dieser Lösung ist jedoch für ein Schließen der Ventilöffnung ein gewisser Überhub erforderlich. Hinzu kommt, daß aufgrund des Sogs der Kraftstofförderpumpe beim Öffnen des Ventils zunächst ein Strecken und ein Dehnen der Membran und dann, wenn auch in abgeschwächter Form, ein Abreißen erfolgt, d. h. dieses Ventil ist nicht frei von Hystereseerscheinungen, erfordert einen relativ langen Öffnungshub und verursacht, abgesehen davon, daß eine höhere Bauform des Schwimmertanks erforderlich ist, eine ungenaue Momentanwertanzeige.

Der vorliegenden Erfindung war daher die Aufgabe gestellt, ein gattungsgemäßes Rückflußeinspeiseventil zu schaffen, bei welchem die genannten Nachteile durch Kompensation der Sogwirkung der Kraftstofförderpumpe vermieden werden und welches die zu regelnde Rückflußmenge mit einem möglichst geringen Hub in den Saugkanal einzuspeisen gestattet.

Die Lösung dieser Aufgabe sieht die im kennzeichnenden Teil von Anspruch 1 aufgeführten Merkmale vor.

In dem Ausführungsbeispiel gemäß der Erfindung ist der eine Ventilsitz in einer in den Sockel einschraubbaren Hohlschraube ausgebildet, und die Hohlschraube ist der dem Schwimmer am nächsten liegenden Öffnung des Kanals zugeordnet. Bevorzugt bildet eine dem Ventilsitz der anderen Öffnungen des Kanals rückseitig zugeordnete Freisparung zusammen mit einer Abdeckung eine Kammer, die über Kanäle mit dem Tankraum in Verbindung steht.

Der entscheidende Vorteil, den die Erfindung bietet, ist darin zu sehen, daß die Sogwirkung der Kraftstofförderpumpe durch die Verwendung eines Doppelventils aufgehoben ist, d. h. daß die Einspeisung des Kraftstoffrückflusses praktisch druckfrei erfolgt. Demgemäß lassen sich, abgesehen davon, daß ohnehin zwei Ventilöffnungen vorgesehen sind, relativ große Ventilquerschnitte wählen, d. h. auch bei schwallartigem Rückfluß ein Minimum an Schwimmerhub und somit eine beruhigte und hysteresearme, also ausreichend genaue Momentanwertanzeige erzielen. Wesentlich ist ferner die exakte Lagerung der Ventilstange und die Tatsache, daß die beiden Einzelventile des erfindungsgemäßen Doppelventils in ihrer Lage zueinander mittels der Hohlschraube justierbar sind, so daß Fertigungs- und Montagetoleranzen auf einfache Weise ausgeglichen werden können. Die Erfindung ermöglicht außerdem die Verwendung einfacher, scheibenförmiger, ohne Überhub und Dehnungseffekte wirkende Dichtkörper und somit trotz des Doppelventils eine relativ niedrige Bauhöhe.

Im folgenden sei das bevorzugte Ausführungsbeispiel anhand der beigefügten Zeichnungen näher erläutert. Es zeigen

FIG. 1 eine schematische Darstellung eines Einspritzkreislaufs eines Dieselmotor-Betriebssystems mit einem im Saugbereich angeordneten Mengenmeßgerät,

FIG. 2 eine Draufsicht auf einen als Gasabscheider dienenden Tank,

FIG. 3 einen Längsschnitt des Tanks gemäß der Schnittlinie A-B in FIG. 2.

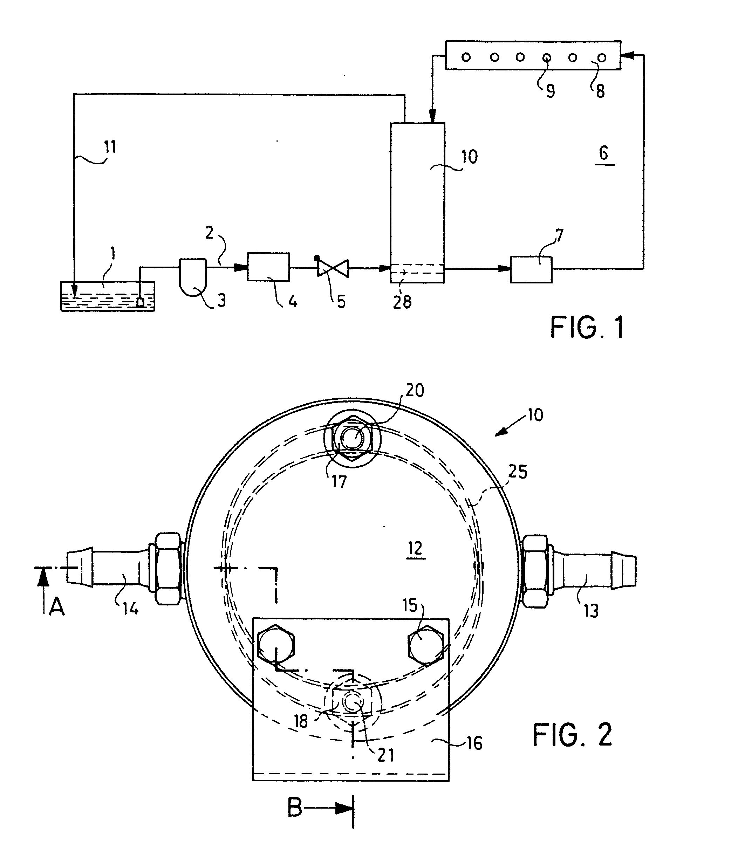

Die schematische Darstellung FIG. 1 zeigt ein Diselmotor-Betriebssystem mit einem Kraftstoffvorratstank 1, einer in den Kraftstoffvorratstank 1 führenden Saugleitung 2, in der ein Filter 3, ein Mengenmeßgerät 4 und ein Rückschlagventil 5 eingeschaltet sind, sowie einen Einspritzkreislauf 6, in welchem, ausgehend von einer Kraftstofförderpumpe 7, über eine Einspritzpumpe 8 - die Einspritzdüsen sind mit 9 bezeichnet- und einen Tank 10 eines Gasabscheiders eine bestimmte, gegenüber der Einspritzmenge im allgemeinen relativ große Kraftstoffmenge in Umlauf gehalten wird. Mit 11 ist eine Kraftstoffvorratstank 1 und Gasabscheidertank 10 verbindende Gasleitung bezeichnet.

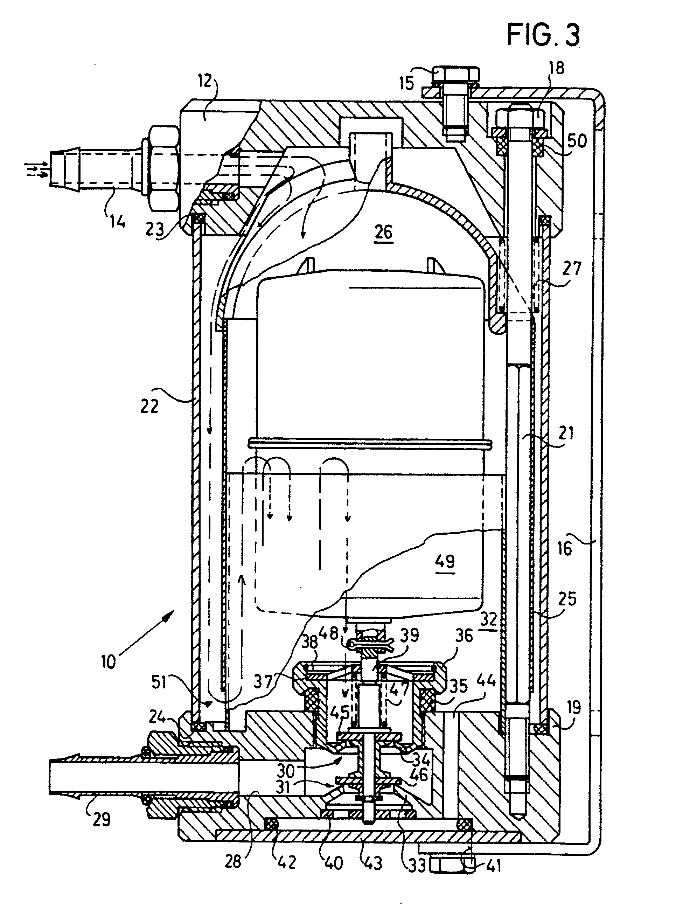

Die Draufsicht FIG. 2 zeigt einen Deckel 12 des im wesentlichen zylindrischen Tanks 10, an welchem Schlauchanschlußmittel 13 und 14 für einerseits das Anbinden des von der Einspritzpumpe 8 ausgehenden Rückflußzweiges des Einspritzkreislaufs, andererseits die Gasleitung 11 befestigt sind. Dem Tank 10 ist ferner ein mittels Schrauben, von denen eine mit 15 bezeichnet ist, angebrachter Bügel 16 zugeordnet, mittels dessen der Tank 10 an einer geeigneten Stelle im Motorraum eines Fahrzeuges befestigt werden kann. Im Deckel 12 versenkt angeordnete Muttern 17 und 18 dienen dem Befestigen des Deckels 12 auf in einem Sockel 19 (FIG. 3) des Tanks 10 befestigten Stützen 20 und 21.

Der in FIG. 3 dargestellte Schnitt A-B zeigt, daß der Tank 10 außer dem Deckel 12 und dem Sockel 19 aus einer Hülse 22 besteht, die zwischen Deckel 12 und Sockel 19 unter Zwischenlage von Dichtungen 23 und 24 gehaltert ist. Außerdem enthält der Tank 10 eine doppelwandige Hülse 25, mit der, um eine ausreichende Entgasung zu erzielen, der rückfließende Kraftstoff umgelenkt und der Strömungsweg verlängert wird, sowie eine Prallkuppel 26, die zusammen mit der Hülse 25 unter der Wirkung zweier Federn, von denen in FIG. 3 eine - 27 - dargestellt ist, auf den Stützen 20 und 21 gehaltert ist.

Wie aus FIG. 3 ferner hervorgeht, ist im Sockel 19 ein quer zur Hochachse des Tanks 10 liegender Kanal 28 ausgebildet, welcher über Schlauchanschlüsse, von denen einer dargestellt und mit 29 bezeichnet ist, zwischen Saugleitung 2 und Einspritzkreislauf 6 einschaltbar ist. Der Kanal 28 weist in Richtung der Hochachse des Tanks 10 zwei Öffnungen 30 und 31 auf, die ihn fluidisch mit dem Tankraum 32 verbinden. An der einen Öffnung 31 ist ein erster Ventilsitz 33 ausgebildet, während ein zweiter Ventilsitz 34 einer in den Sockel 19 unter Zwischenlage einer Dichtung 35 einsetzbaren Hohlschraube 36 zugeordnet ist. Die mit einem nicht näher bezeichneten Rändelbund versehene Hohlschraube 36 dient ferner der Aufnahme einer mit ebenfalls nicht bezeichneten Öffnungen versehenen Lagerplatte 37, die mittels eines Federringes 38 in der Hohlschraube 36 gehalten wird und in der die eine Lagerstelle einer Ventilstange 39 ausgebildet ist. Die zweite Lagerstelle der Ventilstange 39 ist in einer ebenfalls von Öffnungen durchbrochenen Lagerplatte 40 vorgesehen, die in einer der Öffnung 31 bzw. dem an der Öffnung 31 ausgebildeten Ventilsitz 33 rückseitig zugeordneten Freisparung 41 eingesetzt ist. Die Freisparung 41 bildet zusammen mit einer am Sockel 19 flüssigkeitsdicht (Dichtung 42) befestigten Abdeckung 43 eine Kammer, die über mehrere Kanäle, von denen einer - 44 - in FIG. 3 gezeichnet ist, mit dem Tankraum 32 in Verbindung steht. Ferner zeigt FIG. 3, daß auf der Ventilstange 39 zwei scheibenförmige Dichtkörper 45 und 46 angeordnet sind, daß die Ventilstange 39 unter der Wirkung einer in der Hohlschraube 36 angeordneten Druckfeder 47 steht und daß sie über einen Splint 48 gelenkig mit einem den Tankraum 32 weitgehend ausfüllenden Schwimmer 49 verbunden ist. Mit 50 ist eine von zwei Dichtungen bezeichnet, die den Stützen 20 und 21 zugeordnet sind. Die relativ weich dimensionierte Druckfeder 47 dient im wesentlichen dazu, das im Anwendungsfall Kraftfahrzeug starken Erschütterungen ausgesetzte, schwimmergesteuerte Ventil mit einer gewissen Grundlast zu versehen.

Der Vollständigkeit halber sei noch erwähnt, daß der von der Einspritzpumpe 8 zurückfließende Kraftstoffüberschuß, der beispielsweise über den Schlauchanschluß 14 in den Gasabscheidertank 10 einströmt, zunächst (gestrichelte Pfeile) auf der Prallkuppel 26 auftrifft, sich dort verteilt und zwischen der Hülse 22 und der Außenwand der doppelwandigen Hülse 25 abströmt. Eine in der doppelwandigen Hülse 25 vorgesehene, ringförmige Öffnung 51 vermittelt den Zugang in den Zwischenraum zwischen den Wänden der Hülse 25, wo der Kraftstoffüberschuß wieder aufsteigt, in den Tankraum 32 überläuft und letzlich durch das Doppelventil 34/45, 33/46, wobei ungleiche Strömungswiderstände und Ausströmbedingungen durch eine Vielzahl von Kanälen 44 und die Freisparung 41 vermieden sind, in den Kanal 28 eintritt. Erwähnt sei ferner, daß das Rückschlagventil 5 beispielsweise auch in den Kanal 28 oder in den Schlauchanschluß 29 integriert sein kann.

## Patentansprüche

1. Schwimmergesteuertes Ventil, welchem ein einem Schwimmer (49) Schwimmraum bietender Tank (10) mit einer Gasaustauschöffnung, einer Öffnung für den Flüssigkeitszufluß und einem Sockel zugeordnet ist und welches eine druckfreie Einspeisung des Tankinhaltes in einen im Sockel quer zur Hochachse des Tanks ausgebildeten Kanal (28) gestattet, wobei
   der Kanal über zwei sich in Richtung der Hochachse des Tanks gegenüberliegende Öffnungen mit dem Tankraum fluidisch in Verbindung steht,
   den Öffnungen in ein und dieselbe Richtung weisende Ventilsitze (33,34) zugeordnet sind,
   mit den Ventilsitzen zusammenwirkende Dichtkörper (46,45) auf einer mit dem Schwimmer gekuppelten, in Richtung der Hochachse des Tanks verschiebbar geführten Ventilstange (39) angeordnet sind und der
   eine Ventilsitz (34) an einer der dem Schwimmer am nächsten liegenden Öffnung des Kanals zugeordneten Hohlschraube (36) ausgebildet ist,
   **dadurch gekennzeichnet,**
   daß in der Hohlschraube (36) eine der Ventilstange (39) zugeordnete Lagerplatte (37) angeordnet ist,
   daß die einstückig ausgebildete Ventilstange (39) in der Lagerplatte (37) axial geführt ist und daß die Dichtkörper (45, 46) scheibenförmig ausgebildet und auf der Ventilstange (39) aufgesteckt sind.

2. Schwimmergesteuertes Ventil nach Anspruch 1,
   dadurch gekennzeichnet,
   daß die Ventilstange (39) in der innerhalb der Hohlschraube (36) angeordneten Lagerplatte (37) und in einer auf der Gegenseite des unmittelbar an dem Kanal (28) ausgebildeten Ventilsitzes (33) angebrachten weiteren Lagerplatte (40) geführt ist.

## Claims

1. Float-controlled valve, with which is associated a tank (10) offering floating space to a float (49), which tank has a gas escape opening, an opening for the supply of liquid and a base and which allows a nonpressurised feed of the contents of the tank into a conduit (28) constructed in the base transversely to the vertical axis of the tank, the conduit having a fluid connection to the tank chamber by way of two openings lying opposite each other in the direction of the vertical axis of the tank, valve seats (33, 34) pointing in one and the same direction being associated with the openings, sealing members (46, 45) cooperating with the valve seats being disposed on a valve stem (39) connected to the float and guided to slide in the direction of the vertical axis of the tank and the one valve seat (3) being constructed on a hollow screw (36) associated with the float at the closest opening of the conduit, characterised in that located in the hollow screw (36) is a bearing plate (37) associated with the valve stem (39), that the valve stem (39) constructed in one piece is guided axially in the bearing plate (37) and that the sealing members (45, 46) are constructed in the form of discs and fitted onto the valve stem (39).

2. Float-controlled valve according to Claim 1, characterised in that the valve stem (39) is guided in the bearing plate (37) located within the hollow screw (36) and in a further bearing plate (40) located on the opposite side of the valve seat (33) constructed directly on the conduit (28).

## Revendications

1. Soupape commandée par flotteur à laquelle est associé un réservoir (10) offrant à un flotteur (49) la place pour flotter, avec une ouverture pour l'échange gazeux, une ouverture pour l'affluence de liquide et un socle, et qui permet une injection sans pression du contenu du réservoir dans un canal (28) réalisé dans le socle transversalement à l'axe vertical du réservoir, où par l'intermédiaire de deux ouvertures opposées dans le sens de l'axe vertical du réservoir, le canal communique fluidiquement avec l'enceinte de réservoir,
   des sièges de soupape (33, 34) dirigés dans le même sens sont associés auxdites ouvertures,
   des éléments d'étanchéité (46, 45) coopérant avec les sièges de soupape sont disposés sur une tige de soupape (39) couplée avec le flotteur, montée mobile dans le sens de l'axe vertical du réservoir et ou
   l'un des sièges de soupape (34) est formé sur un boulon creux à filet femelle (36) associé à l'une des ouvertures du canal située le plus près du flotteur,
caractérisée par le fait
que dans le boulon creux à filet femelle (36) est disposée une platine-support (37) associée à la tige de soupape (39),
que la tige de soupape (39) réalisée en une seule pièce est guidée axialement dans la platine-support (37) et
que les éléments d'étanchéité (45, 46) sont réalisés sous forme de rondelle et enfilés sur la tige de soupape (39).

2. Soupape commandée par flotteur selon la revendication 1,
caractérisée par le fait
que la tige de soupape (39) est guidée dans la platine-support (37) disposée à l'intérieur du boulon creux à filet femelle (36) et dans une autre platine-support (40) disposée du côté opposé du siège de soupape (33) réalisé directement sur le canal (28).

FIG. 1

FIG. 2

6

FIG. 3